# EUROPEAN PATENT APPLICATION

(11) **EP 3 705 318 A1**
(43) Date of publication of application: **09.09.2020**
(21) Application number: 20160647.2
(22) Date of filing: 03.03.2020
(51) Int. Cl.: B60G 3/20, B60G 11/27

(54) **BUS SUSPENSION SYSTEM WITH INDEPENDENT ACTUATOR**

(30) Priority: 04.03.2019 LU 101142
(71) Applicant: Alpha EC Industries 2018 S.à r.l., 1661 Luxembourg (LU)
(72) Inventor: Hallundbæk, Jørgen, 1661 Luxembourg (LU)
(74) Representative: Rousseau, Cyrille

(57) **Abstract**

The invention provides a bus (2), notably an electric bus, said bus comprising: a structure with a wheel housing (18); at least two wheels (8) in the wheel housing; a seat (52); a suspension system (34) connected to the wheel. The suspension system comprises: a lower arm pivoting about a lower upper longitudinal pivot axis; an upper arm (36) pivoting about an upper longitudinal pivot axis (38); a gas actuator (40) joined to the upper arm and to the wheel housing. The wheel housing (18) comprises a first, a second and a third longitudinal beam (46) which are respectively joined to the lower arm (35), the upper arm (36), and the gas actuator (40).

## Description

### Technical field

The invention lies in the field of suspensions systems for mass transportation vehicles. The invention offers a suspension system equipped with a gas actuator for a bus. The invention adapts a suspension system to a low floor bus. The invention provides an articulated bus with suspension systems, the articulated bus optionally being an electric bus.

### Background of the invention

Buses are equipped with suspension systems in order to provide comfort to passengers. A suspension system absorbs road unevenness in order to reduce the tremors felt by passengers. Standing passengers suffer less unbalanced positions or equilibrium losses whereas seated passengers feel less shocks from their seats. As a side benefit, noise may be reduced since vibrations are mechanically filtered.
The suspension systems also maintain contact between wheels and the ground. This advantage may be applied to driving wheels and to steering wheels. In curves and in braking situations, the wheels keep a homogeneous contact which reduces sideslip situations. Then, braking distances may be reduced, and turning radius may be followed as predefined. Thus, safety is provided due to the road handling.
A suspension system may be fitted with an actuator. Such an actuator allows to control the level of the bus, and to correct the vehicle pitch due to the varying passenger repartition. If required, the actuator may raise or lower a side door with respect to a bus stop in order to ease entrance in the passenger compartment.
The document DE 28 35 865 A1 discloses a bus with a wheel housing enclosing parallel arms forming a suspension system. A gas spring is coupled to the upper arm.
Document US WO 2018/039106 A1 provides a truck with an air spring equipping a suspension system.

### Technical problem to be solved

It is an objective of the invention to present a bus, which overcomes at least some of the disadvantages of the prior art.

### Summary of the invention

According to a first aspect of the invention a bus is provided. The bus, notably an electric bus, said bus comprising: a structure with a wheel housing; a wheel in the wheel housing; a seat; a suspension system connected to the wheel and comprising: a lower arm; an upper arm pivoting about a longitudinal pivot axis; a gas actuator joined to the upper arm and to the wheel housing.

Preferably, the wheel housing includes a horizontal beam supporting the seat, the gas actuator being fixed to said horizontal beam, the horizontal beam possibly being a third longitudinal beam to which the gas actuator is fixed.
Preferably, the wheel housing comprises a second longitudinal beam to which the upper arm is joined, and a first longitudinal beam to which the lower arm is joined.
Preferably, the third longitudinal beam extends longitudinally along the whole longitudinal length of the wheel housing, the third longitudinal beam being notably above the second longitudinal beam.
Preferably, the seat is above the wheel housing, and notably above the gas actuator.
Preferably, the upper arm includes a transversally outer half and a transversally inner half, the gas actuator being joined to said transversally inner half.
Preferably, the wheel housing includes a separation between the horizontal beam and the seat, the gas actuator possibly being at distance from said separation.
Preferably, the seat includes a backrest and/or a seat base which is fixed to the wheel housing, preferably to the horizontal beam.
Preferably, the wheel housing further comprises a fourth longitudinal beam vertically level with the third transversal beam, the gas actuator being joined to said fourth beam.
Preferably, the suspension system is configured such that the gas actuator moves the rotation axis of the wheel at least between a lower position vertically level with the passenger platform, and an upper position above the passenger platform.
Preferably, the gas actuator comprises a lower end fixed to the upper arm, the gas actuator possibly comprising a lower element forming the lower end, an upper bracket and a balloon joining the lower element to the upper bracket, the upper bracket possibly being fixed to the third beam and/or to the fourth beam.
Preferably, the lower element pivots with respect to the upper arm, and/or the upper bracket is anchored to the wheel housing.
Preferably, the gas actuator comprises a gas spring with a pressurized enclosure vertically at distance from the upper arm.
Preferably, the upper arm and the lower arm generally define a parallelogram within the wheel housing.
Preferably, the wheel includes an in-wheel electric engine below the gas actuator and at vertically at distance from said gas actuator, and/or the suspension system includes a knuckle, notably a steering knuckle, connecting the upper arm to the lower arm, and joined to the wheel.
Preferably, the suspension system comprises a damping system which is separate and distinct from the gas actuator, and which is joined to the lower arm.
Preferably, the bus comprises a gas supply hydraulically connected to the gas actuator and adapted to control the pressure within the gas actuator in order to adapt the level and/or the bus inclination.

Preferably, the wheel housing is a right wheel housing, the bus further comprising a left wheel housing and a passenger compartment between the right wheel housing and the left wheel housing, the gas actuator being vertically level with the passenger compartment.
Preferably, the bus comprises a passenger platform extending from the wheel housing and exhibiting a passenger floor, the gas actuator being above said passenger floor, and/or the wheel includes a rotation axis vertically between the gas actuator and the passenger platform.
Preferably, the bus comprises a passenger platform, longitudinally level with gas actuator the passenger platform extends transversally over at least the half of the width of the bus.
Preferably, the wheel is a first wheel, the suspension system is a first suspension system, the bus further comprising a second wheel in the wheel housing a second suspension system joined to the second wheel, the second suspension system possibly being identical to the first suspension system.
Preferably, the wheel housing includes a support joining the seat to the gas actuator.
Preferably, the support may be a horizontal beam, possibly a longitudinal beam.
Preferably, the first longitudinal beam, the second longitudinal beam, and the third longitudinal beam are parallel, and notably transversally level with each other.
Preferably, at least one longitudinal beam is segmented longitudinally.
Preferably, the lower arm and the gas actuator are contact free.
Preferably, the wheel support is a knuckle, notably a steering knuckle.
Preferably, the knuckle, respectively the steering knuckle, and the gas actuator are contact free.
Preferably, the lower arm comprises a lower longitudinal pivot axis which is parallel to the upper longitudinal pivot axis.
Preferably, the wheel housing is a wheel cavity.
Preferably, the gas actuator is on the upper arm.
Preferably, the gas actuator is arranged in an upper half of the wheel housing.
Preferably, the fourth longitudinal beam extends along the whole length of the wheel housing. Preferably, the right wheel housing and the left wheel housing are symmetric.
Preferably, the gas actuator is vertically at distance from the lower arm and/or contact free with the lower arm.
Preferably, the bus comprises a passenger compartment, longitudinally level with gas actuator the passenger compartment extends transversally over at least the half of the width of the passenger platform.
Preferably, the seat is a seat area, notably with at least one rounded edge.
the gas actuator comprises an upper bracket joined to the wheel housing.
Preferably, the distance D between the upper position and the lower position is larger, possibly at least two times as larger as, the vertical thickness TH, of the passenger platform, said vertical thickness TH notably being an average thickness.
Preferably, the damping system may be inclined with respect to the gas actuator.

Preferably, the gas actuator is fixed to a horizontal beam of the wheel housing.
Preferably, the gas actuator is fixed to one of: an upper face, a side face, or a transversal side of the wheel housing.
Preferably, the gas actuator is fixed to a wall of the wheel housing.
Preferably, the wall is an inner wall and/or a side wall.
Preferably, the gas actuator comprises a lower end including a lower element with a pivot joint pivotably attached to the upper arm, said pivot joint optionally pivoting about a longitudinal axis with respect to the upper arm.
Preferably, the gas actuator comprises an upper bracket forming an upper anchor portion fixed to the wheel housing.
Preferably, the wheel housing further comprising a fourth longitudinal beam vertically level with the third longitudinal beam, wherein the gas actuator extends between the third longitudinal beam and the fourth longitudinal beam.
Preferably, the wheel support is transversally at distance from the gas actuator, the suspension system defining a transversal separation between the wheel support and the gas actuator

The seat, the wheel housing and the structure are not essential aspects of the invention.
It is another object of the invention to provide a bus, notably an electric bus, said bus comprising: a cavity, a wheel in the cavity, a structure comprising at least three longitudinal beams, said at least three longitudinal beams forming the cavity and possibly being superimposed; a wheel in the wheel housing; a suspension system connected to the wheel and comprising: a lower arm; an upper arm pivoting about a longitudinal pivot axis; a gas actuator joined to the upper arm; each of the three longitudinal beams being joined to one of: the lower arm, the upper arm, and the actuator.

It is another object of the invention to provide a bus, notably an electric bus, said bus comprising: a wheel housing; a wheel in the wheel housing; a seat notably included in a longitudinal seat row; a suspension system connected to the wheel and comprising: a lower arm; an upper arm pivoting about a longitudinal pivot axis; a gas actuator joined to the upper arm and covered by the seat; and/or covered by the seat row.

It is another object of the invention to provide a bus, notably an electric bus, said bus comprising: a wheel housing or a structure comprising at least one horizontal beam, said horizontal beam possibly being a longitudinal beam; a wheel for instance in the wheel housing; a seat notably comprised in a longitudinal seat row; a suspension system connected to the wheel and comprising: a lower arm; an upper arm pivoting about a longitudinal pivot axis; a gas actuator joined to the upper arm; the horizontal beam joining the gas actuator to the seat and/or to the seat row.

It is another object of the invention to provide a use of a pivoting gas actuator for connecting an upper arm of a suspension system to a wheel housing of a structure of a bus, said bus further comprising: a wheel in the wheel housing and a seat; said suspension system being connected to the wheel and comprising: a lower arm below the upper arm and pivoting about a longitudinal pivot axis.

It is another object of the invention to provide a bus such as n electric bus, said bus comprising:
- a structure with a wheel housing;
- a seat on the wheel housing;
- a wheel including an in-wheel engine under the seat;
- a suspension system connected to the wheel and comprising:
   ∘ a lower arm;
   ∘ an upper arm pivoting about a longitudinal pivot axis;
   ∘ a gas actuator joined to the upper arm and to the wheel housing;
   ∘ the upper arm includes a transversally outer half and a transversally inner half, the gas actuator being joined to said transversally inner half and transversally separated from the outer half.
Preferably, the seat includes backrest facing a longitudinal central axis of the bus, and a seat base which is fixed to the wheel housing above the gas actuator, the back rest being at an outboard end of the seat base.

It is another object of the invention to provide a bus comprising:
- a structure including a wheel housing with three longitudinal beams above one another, said three longitudinal beams including:
   ∘ a longitudinal lower beam,
   ∘ a longitudinal upper beam,
   ∘ a longitudinal intermediate beam between the longitudinal lower beam and the longitudinal upper beam;
- a wheel in the wheel housing;
- a suspension system associated with to the wheel and comprising:
   ∘ a lower arm;
   ∘ an upper arm;
   ∘ a gas actuator joined to the upper arm;
   wherein the lower arm, the upper arm and the gas actuator are respectively attached to the longitudinal lower beam, the longitudinal intermediate beam and the longitudinal upper beam.

Preferably, the upper longitudinal beam is formed by an inboard element above the longitudinal lower beam and the longitudinal intermediate beam, and an outboard element to which the gas actuator is joined, the inboard element and the outboard element being transversally adjacent.

The different aspects of the invention may be combined to each other. In addition, the preferable features of each aspect of the invention may be combined with the other aspect of the invention, unless the contrary is explicitly mentioned.

### Technical advantages of the invention

The invention provides a suspension system adapted for a bus with a large passenger compartment on a low floor bus. The provided solution is compact and is integrated in a narrow space. The wheel housing may be kept small in order to preserve the passenger compartment.
The invention accommodates the seat rows, while keeping a wide suspension stroke.
The invention optimizes the mechanical stress transfer from the ground, and the bus load distribution. In addition, the unbalanced portions are reduced.

### Brief description of the drawings

Several embodiments of the present invention are illustrated by way of figures, which do not limit the scope of the invention, wherein
- figure 1 provides a schematic illustration of a side view of a bus in accordance with a preferred embodiment of the invention;
- figure 2 provides a schematic illustration of an aerial view of a portion of a bus structure in accordance with a preferred embodiment of the invention;
- figure 3 provides a schematic illustration of side view of a bus under structure in accordance with a preferred embodiment of the invention;
- figure 4 provides a schematic illustration of a longitudinal view of a suspension system in accordance with a preferred embodiment of the invention;
- figure 5 provides a schematic illustration of a transversal view from inside of a suspension system in accordance with a preferred embodiment of the invention;
- figure 6 provides a schematic illustration of a transversal view from outside of a suspension system in accordance with a preferred embodiment of the invention.

### Detailed description of the invention

This section describes the invention in further detail based on preferred embodiments and on the figures. Similar reference numbers will be used to describe similar or the same concepts throughout different embodiments of the invention.

It should be noted that features described for a specific embodiment described herein may be combined with the features of other embodiments unless the contrary is explicitly mentioned. Features commonly known in the art will not be explicitly mentioned for the sake of focusing on the features that are specific to the invention. For example, the bus in accordance with the invention is evidently controlled by a computer, even though such a computer is not explicitly referenced on the figures nor referenced in the description.
By way of convention, it may be defined that the word "longitudinal" refers to the longitudinal direction and may correspond to the main driving direction of the bus. It may be along the main central axis of the vehicle. The word "transversal" refers to the transversal direction and may be perpendicular to the longitudinal direction. It may be understood that the directions are not used in a strict meaning. Indeed, each direction used below may include a variation of at most: 5°, or 2°, or 1°, with respect to a strict meaning. The skilled in the art will understood that a vertical swivel axis may be inclined with respect to the vertical direction.
It should be noticed that the present drawings generally provide configurations where wheels are substantially parallel to the longitudinal direction. The steering angle is of 0°. The vehicle may drive along a straight trajectory. However, the skilled in the art will be able to adapt the following teaching to situations where the steering angle of the bus is changed.

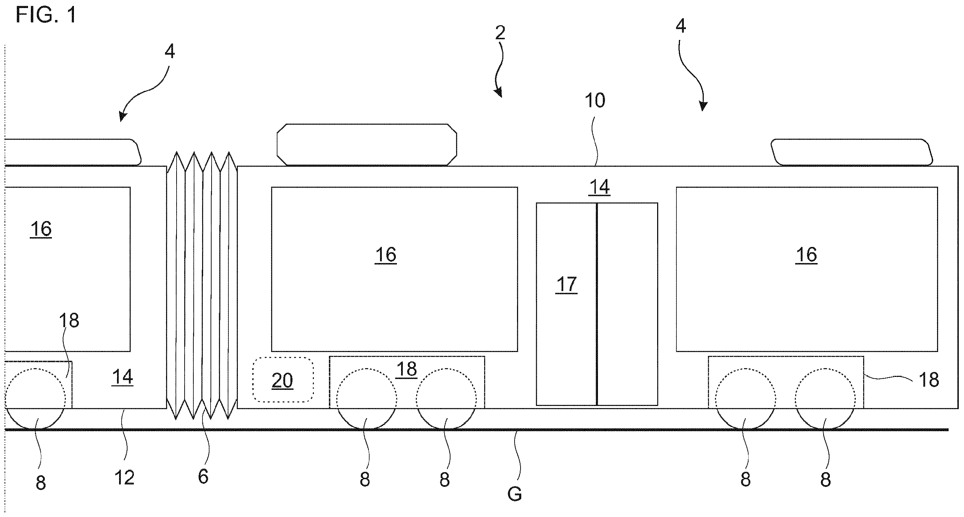

Figure 1 shows a vehicle for mass transportation in accordance with a preferred embodiment of the invention. The vehicle is partially represented.
The vehicle is adapted for transportation of passengers in cities and may transport about one hundred passengers, for instance one hundred and twenty passengers. The vehicle may be a bus 2, notably an electric bus 2. The bus 2 may include electric driving engines and electric batteries (not represented) powering the electric driving engines. The bus 2 may be purely electric, in the meaning that it is free of combustion engine.
The bus 2 may be an articulated bus. It may comprise a first unit 4 and a second unit 4 (partially represented). Each unit 4, may form a body, and/or may form a rigid element. Each unit 4 may be a trailer and/or a tractor. The units 4 may be similar or identical. These units 4 may be joined by a connection, for instance a hinged connection 6 enabling the units 4 to swivel with respect to each other.
In the current embodiment, only two units 4 are represented, however it is contemplated in the current invention that the electric bus 2 includes three, four, or more units 4; which are articulated with respect to one another by hinged connection(s) 6. Then, the passenger capacity may be of more than two hundred. Each unit 4 may be self-supporting. Thus, each unit 4 may move without the hinged connection 6.
A bus formed of a single unit is also considered in the invention.

Each unit 4 may include several wheels 8 engaging the ground G. Pairs of symmetric wheels 8 may form axles, for instance four axles for each unit 4. The axles and thus the wheels 8 may be distributed along the length of the bus 2. At least one pair of wheels is formed of steered wheels. Optionally, each wheel 8 of the bus 2 or of at least one unit 4 are steered wheels and/or driving wheels. The roof 10 may support equipment, for instance an air conditioning system, and other systems as well.
The bus 2 may include a structure. The structure may distribute and/or support the weight of the bus, and load therein. The structure may include a roof 10, and/or a passenger platform 12, and/or side walls 14. The side walls 14 may be outer walls. Two transversally opposite side walls 14 may go down from the roof 10 to the passenger platform 12. They may form the bodywork of the bus 2. They may cover transversally the wheels 8. The bodywork may be part of the bus structure. The side walls 14 may receive windows 16 and doors 17 for passengers. Optionally, doors 17 are be arranged in one of the two side walls 14, notably between windows 16.
For instance; the side walls 14 may close the wheel housings 18. The latter may notably receive the wheels 8 by couples. Optionally, at least one or each wheel housing 18 may receive two longitudinally spaced wheels 8. The wheel housings 18 may form downwardly open boxes. The wheel housings 18 may be longitudinally at distance from the ends of the units 4. The wheel housing may be arranged below the windows 16. The door 17 may be disposed between two wheel housings 18 of the corresponding unit 4.
Generally, the or each wheel housing 18 may be understood a space in which at least one wheel is arranged. The or each wheel housing 18 may be a wheel cavity. The or each wheel housing 18 may be a wheel guard.
The bus 2 may comprise a gas supply 20. The gas supply may be arranged adjacent to one of the wheel housings 18. The gas supply 20 may comprise a gas tank and/or a gas pump (not represented). The gas supply may comprise a gas circuit. The gas may be air.

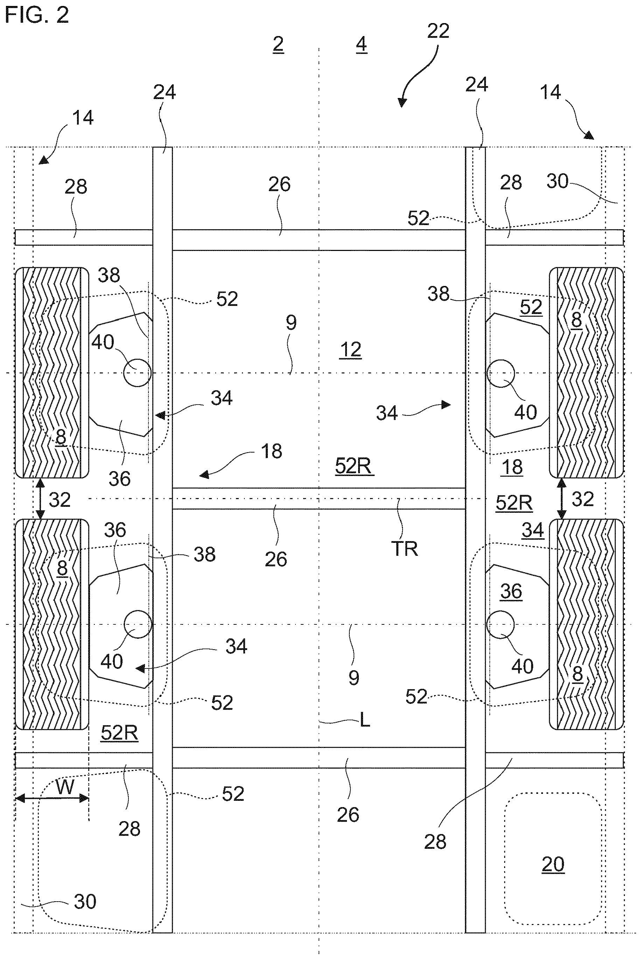

Figure 2 provides an aerial illustration of the under structure 22 of a bus 2, or from a unit 4 in accordance with a preferred embodiment of the invention. The longitudinal central axis L and the transversal direction TR are represented.
The bus 2 and/or the unit 4 may correspond to those as described in relation with figure 1. Two pairs or wheels 8 are disposed in respective wheel housings 18. The rotations axes 9 of the wheel are represented. The wheel rotations axes 9 may correspond to the axles when the wheels 8 are parallel. It may be understood that the wheels 8 comprise toe-in or toe-out. Thus, the term "parallel" may be understood in the meaning of the environment of the invention.
The under structure 22 may form the platform 12 of the bus 2. The platform 12 may be a passenger platform, and may include a passenger floor on which the passengers (not represented) may stand and walk. The under structure 22 may comprise longitudinal beams, notably lower longitudinal beams 24. The longitudinal beams, and possibly the lower longitudinal beams 24, may extend on the whole length of the unit 4, or at least on majority of the length of the unit 4. The lower longitudinal beams 24 may delimit the wheel housings 18. Only two lower longitudinal beams 24 are represented, however the under structure 22 may comprise additional lower longitudinal beams 24.
The under structure 22 may comprise transversal beams 26. The transversal beams 26 project from one lower longitudinal beam 24 to the opposite lower longitudinal beam 24. The transversal beams 26 may project from one wheel housing 18 to the symmetric and transversally opposite wheel housing 18.
The wheel housings 18 may comprise transversal bars 28. The transversal bars 28 may form the longitudinal ends of the wheel housings 18. The wheel housings 18 may further comprise upper longitudinal beams 30 at their transversal outer end. These upper beams 30 may form the side walls 14.
At least one wheel 8 is disposed in at least one wheel housing 18. At least one or each wheel housing 18 encloses two wheels 8. The wheels 8 may be received by pairs in the wheel housings 18. The wheels 8 of each pair are adapted to run on the same path. These wheels 8 may be transversally aligned. In each pair, the wheels 8 are longitudinally offset. A longitudinal distance 32 may separate them. The longitudinal distance 32 may be shorter than the transversal width W of the wheels 8. The wheels 8 of each pair may be identical.
The width of the bus may be of about 2,5 m. Along and/or between the wheel housings 18, the passenger platform 12 may extend at least on the half of the width of the bus 2. At least one or each wheel housing 18 may extend on at most the quarter of the width of the bus 2. This feature eases longitudinal circulation within the passenger compartment, and allows two pushchairs to cross each other between the wheel housings 18. It also provides the technical effect of strengthening the platform 12.
The position of the gas supply 20, notably of its gas tank, is represented. It may be arranged along one of the wheel housings 18.
The bus may comprise at least one suspension system 34, possibly several suspension systems 34. The suspension systems 34 may be independent from each other mechanically. Each suspension system 34 may connect one of the wheels 8 to the under structure 22, and/or to the corresponding wheel housing 18. The wheels 8 may be independently linked to their wheel housing 18.
At least one or each suspension system 34 may comprise one or several arms. In at least one or each suspension system 34 the arms may be parallel. The arms may be pivotably linked to the longitudinal beams, for instance to the lower longitudinal beams 24. In at least one or in each suspension system 34 the arms may comprise a lower arm (not represented) and an upper arm 36 over the lower arm. The upper arms 36 may pivot about upper longitudinal pivot axes 38.

At least one or each suspension system 34 may comprise an actuator, notably a gas actuator 40. The gas actuators 40 may be joined to the upper arms 36. The gas actuators 40 may be in contact of the upper arms 36. The gas actuators 40 may comprise gas springs. The gas actuators may be in fluid communication with the gas supply 20. Gas pipes and piloted check valves (not represented) may control the gas fed to the gas actuators 40 from the gas supply 20.
The bus 2 may comprise at least one seat 52, possibly at least one row of seats 52 where the seats are disposed side by side along the longitudinal direction L. The row(s) may be longitudinal row(s). At least one seat row 52R comprises at least: two, or three, or six seats 52. At least one seat 52 may be arranged above one of the suspension systems 34. At least one gas actuator 40 may be arranged below one seat 52 or one seat row 52R. In the top view, at least one gas actuator 40 may be enclosed in the outline of one of the seats 52. At least one or each gas actuator 40 may be enclosed in the outline of one of the seat rows 52, respectively of the seat rows 52R.
As an option, at least one or each wheel housing receives three wheels 8.

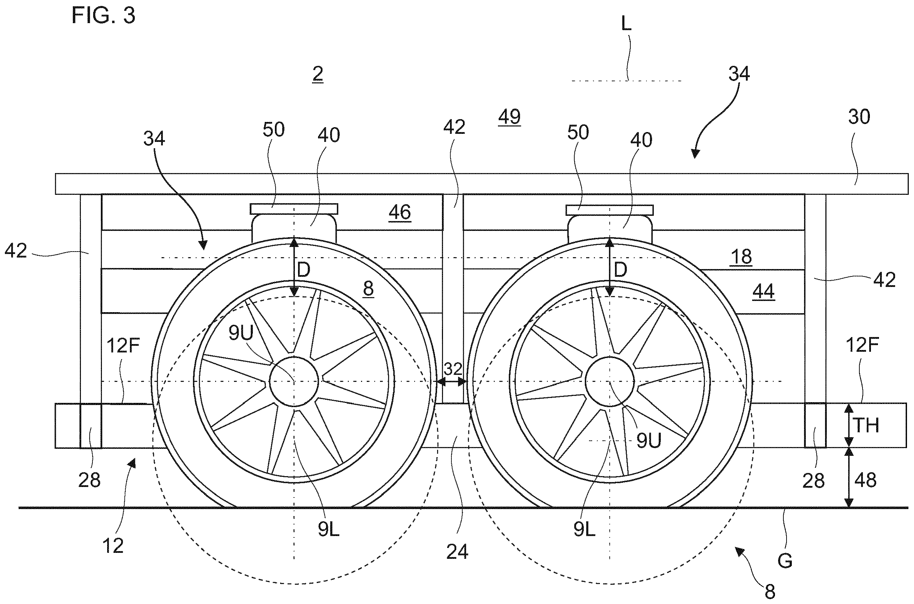

Figure 3 provides a schematic illustration of a side view of a bus portion in accordance with a preferred embodiment of the invention. The current side view may correspond to a side view of figure 2. The side view is centred on a wheel housing 18. The wheel housing 18 may correspond to those as described in relation with any one of figures 1 and 2.
The wheel housing 18 receives two wheels 8 which may be below the upper longitudinal beam 30. The wheel housing 18 may comprise vertical bars 42, which may project from the transversal bars 28.
The lower longitudinal beam 24 may be a first longitudinal beam 24. The wheel housing 18, and more generally, the bus structure, may further comprise a second longitudinal beam 44 and a third longitudinal beam 46. The second longitudinal beam 44 may be between the first longitudinal beam 24 and the third longitudinal beam 46. These three longitudinal beams may be parallel. They may be above one another. They may define an inboard wall of the wheel housing 18. The third longitudinal beam 46 may be the uppermost longitudinal beam of the wheel housing 18. The beams (24; 30; 44; 46) and bars (28; 42) may be part of the structure of the bus 2. Plates or sheets may be fixed to the beams and bars in order to strengthen the structure. Beams and bars may be tubular profiles.
The wheel housing 18 may exhibit a vertical portion enclosing the first longitudinal beam 24, the second longitudinal beam 44 and the third longitudinal beam 46. This vertical portion may be an inboard portion. It may form a barrier or a wall. The wheel housing 18 may exhibit a horizontal portion enclosing the third longitudinal beam 46 and the upper longitudinal beams 30. The horizontal portion may form a top portion of the wheel housing 18. The horizontal portion may receive a seat (not represented). The third longitudinal beam 46 and the upper longitudinal beam 30 may be connected by a transversal bar (here hidden by the upper longitudinal beam).

Each wheel 8 may be linked to the wheel housing 18 by a dedicated suspension system 34. Thus, the wheels 8 may oscillate between a lower position represented with dotted lines, and an upper position represented in plain lines. These positions may be respectively a first position and a second position, or a driving position and a boarding position respectively. The distance D between these positions may be measured at the summit of the wheels 8. The longitudinal distance 32 between the wheels 8 in the wheel housing 18 may be the same in the upper position and in the lower position. Each suspension system 34 may be encircle by one of the wheel housings 18 in order to respect compacity requirements.
Alternatively or in addition, the distance may be measured by means of the rotations axes (9L, 9L) of the wheels 8. In the lower position, the rotation axes 9L are in lower positions, in the upper position the rotation axes 9U are in upper positions. These positions are positions of the wheels 8 with respect to the platform 12. In the lower position, the rotation axes 9L may be vertically level with the platform 12, notably within the thickness TH of the platform 12. In the upper position the rotation axes 9U may be above the platform 12. In the upper position, the upper surface of the platform, for instance the passenger floor 12F, may be at distance and below the rotation axes 9U. Thus, in the lower position of the wheels 8, the platform 12 is raised from the ground G, whereas in the upper position of the platform 12 approaches the ground G, and the ground clearance 48 reduces.
The ground clearance 48, in the first position and notably in the second direction, may be larger than the thickness TH of the platform 12. The distance D between the upper position and the lower position may be greater than the vertical thickness TH, possibly the average thickness, of the passenger platform 12. The distance D may be larger than the vertical thickness TH.
This implies that the thickness TH is reduced, and that the platform is a low floor platform which eases access to the passenger compartment 49.
The gas actuator 40 may comprise an upper bracket 50. The upper bracket 50 may be a transversal upper bracket 50. The upper bracket 50 may project transversally from one of the longitudinal beams, possibly from the third longitudinal beam 46.
As a general aspect of the invention, it may be understood that the bracket 50 is a support.
A vertical bar 42 of the wheel housing 18 may cross at least one longitudinal beam, for instance the second and/or the third longitudinal beam 46. Thus, it may be considered that the corresponding longitudinal beam is segmented along the longitudinal direction L. However, the segments of the cut longitudinal beam may be aligned as in a single beam.

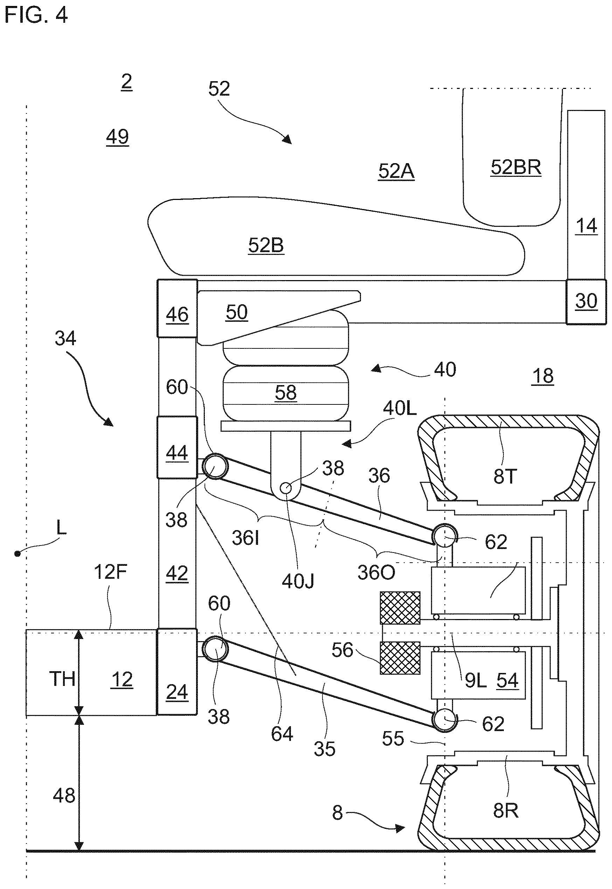

Figure 4 provides a schematic illustration of a suspension system 34 in accordance with a preferred embodiment of the invention. The suspension system 34 may correspond to the ones as described in relation with any one of figures 2 to 3. In the current figure, the wheel 8 is in the lower position. The suspension system 34 is in the lower configuration.

The suspension system 34 may be enclosed in the wheel housing 18, wherein the wheel 8 is partially contained. Thus, the ground clearance 48 is preserved, at least in the driving configuration, and the suspension system 34 is less exposed to protruding surfaces of the ground which could damage it.
The wheel housing 18 may support at least one seat 52, possibly a seat row of the bus 2. The wheel housing 18 may support and/or receive and/or extend along at least three or four seats 52. The seats may be identical. Each seat may comprise a seat base 52B and a back rest 52BR which may mate the side wall 14. The seat base 52B may substantially extend on the whole transversal width of the wheel housing 18. The seat 52 may generally be a seat area 52A. A seat area 52A may be adapted for receiving a seated passenger. It may have a longitudinal length comprised between 0,4 m and 1m. It may have a concave main surface, and/or rounded edges.
At least one or each seat 52 on the wheel housing 18 may face the longitudinal centreline L of the passenger compartment 49. Thus, the current arrangement adapts technically the suspension system 34 to a wheel housing 18 supporting seats 52 for passengers.
The suspension system 34 may comprise a lower arm 35. The lower arm 36 may be parallel to the upper arm 36. The upper and lower arm (36; 35) may define a parallelogram. They may have the same transversal width. As an option, the arms (36; 35) have different length longitudinally. The arms (36; 35) may form a parallelogram in the lower and in the upper position of the wheel 8, and notably of said arms (36; 35). The upper and lower arm (36; 35) may generally be a first arm and a second arm, respectively. The lower arm 35 may be a lower swinging arm. The upper arm 36 may be an upper swinging arm. The arms may generally be links, for instance pivoting links.
The suspension system 34 may comprise a wheel support 54. The wheel support 54 may be knuckle 54. The knuckle 54 may be joined, for instance pivotably fixed to the lower arm 35 and to the upper arm 36. The knuckle 54 may be a steering knuckle. The knuckle 54 may be a kingpin. It may rotate about a vertical pivot axis 55 by response to an actuation of a steering actuator (not represented). The wheel 8 may be rotatably fixed to the knuckle 54, and may rotate about its rotation axis 9L.
The knuckle 54 may receive an engine 56 associated with the wheel 8. The engine 56 may be an electric engine. It may rotate the wheel 8 in order to drive the bus 2. The engine 56 may be an in-wheel engine. The engine 56 may be arranged around the rotation axis 9L of the wheel 8. It may be smaller than the rim 8R of the wheel 8. It may be arranged between the lower arm 35 and the upper arm 36, notably in the parallelogram that they form in order to improve compactness.
The upper arm 36 may be joined to the second longitudinal beam 44, for instance by means of an upper pivot which pivots about a longitudinal pivot axis 38. The lower arm 35 may be joined to the first longitudinal beam 24, for instance by means of a pivot which pivots about a lower longitudinal pivot axis 38. The second longitudinal beam 44 may be closer to the third longitudinal beam 46 than to the first longitudinal beam 24. Thus, the upper half of the wheel housing 18 is stiffer. In addition, the second longitudinal beam 44 provide an additional protection to passenger legs against side collisions from other vehicles. The longitudinal beams (24, 44, 46) may more generally be horizontal beams. They may be connected by at least one vertical bar 42.
The vertical thickness of the first longitudinal beam 24 may be equal or similar to the thickness TH of the passenger platform 12. The thickness TH of the passenger platform 12, and notably the vertical thickness of the first longitudinal beam 24, may be smaller than the ground clearance 48. They may be thinner than 10 cm.
The gas actuator 40 may comprise a lower element 40L. The lower element 40L may be fixed to the upper arm 38. The lower element 40L may form the lower end of the gas actuator 40. The lower element 40L and the upper arm 36 may be joined through a mechanical joint 40J. The mechanical joint 40J may comprise a pivot joint or a ball joint. It may allow a pivot about a longitudinal pivot axis 38.
In the driving configuration and/or in the docking configuration where the bus is forcibly tilted toward the side of a bus stop, the altitude of the passenger floor 12F may be smaller than: 0,5 m; 0,4 m; or 0,3m. The altitude may correspond to the addition of the ground clearance 48 and the thickness TH.
The gas actuator 40 may be vertically level with the wheel 8. They may face each other. The tire 8T of the wheel 8 may be vertically level with the lower element 40L. The wheel top may be vertically level with the pressurized enclosure 58. The wheel rotation may foster an air flow within the wheel housing 18, and thus cool the pressurized enclosure 58. Then, the working conditions of the gas actuator may be adapted.
The gas actuator 40 may comprise a pressurized enclosure 58. The pressurized enclosure 58 may comprise a balloon. The balloon, and thus the pressurized enclosure 58 may join the lower element 40L and the upper bracket 50, possibly through an upper element (not represented). The upper element and the lower element 40L may comprise a plate, possibly a horizontal plate. By varying the pressure within the pressurized enclosure 58, the height of the gas actuator 40 may be modified in order to move the wheel 8 within the wheel housing 18.
Further, the gas actuator 40 may form a spring. Then varying the pressure within the pressurized enclosure 58 means adapting the stiffness of the corresponding spring. This aspect allows to adapt the suspension system 34 to the number of passengers in the passenger compartment, or more generally to the load in the bus even when the load distribution is heterogeneous.
The upper arm 36 may comprise an inner half 361 and an outer half 36O. The inner half 361 and the outer half 36O may be considered transversally. They may be considered along the transversal width of the upper arm 36.
The inner half 36I may be joined to the wheel housing, notably to the second longitudinal beam 44, by means of a pivot joint 60 which pivots about the longitudinal pivot axis 38 and which is fixed to the second longitudinal beam 44. The outer half 36O may be joined to the knuckle 54, possibly through an outer mechanical joint 62. A pivot joint and/or ball joint may form said outer mechanical joint 62.
The lower arm 35 may be connected to the wheel housing 18 and to the knuckle 54 by a similar pivot joint 60 fixed to the first longitudinal beam 24 and a similar outer mechanical joint 62. The outer mechanical joints 62 may define the vertical pivot axis 55 about which the knuckle 54, and by way of consequence the wheel 8, is steered.
The gas actuator 40 may be connected to the upper arm at a location within the inner half 361 of said upper arm 36. More precisely, the mechanical joint 40J may be arranged within, and/or in contact of the inner half 361. Notably transversally, the mechanical joint 40J may be closer to the pivot joint 60 than to the outer mechanical joints 62 of the upper arm 36.
The suspension system 34 may comprise a damping system 64. The damping system 64 may be separate and distinct from the gas actuator 40. The damping system 64 may be adapted for absorbing vibrations transmitted by the wheel 8 to the bus structure. It may convert mechanical energy into thermal energy. The damping system 64 may be inclined with respect to gas actuator 40. The damping system 64 may exhibit a centre line inclined with respect to the centre line of the gas actuator. The centre lines may be lines along which the corresponding actuator or system works. Thus, the kinematics are different, and the mechanical resistances show different progressions in function of the inclination of the arms with respect the passenger platform 12.
The damping system 64 may be fixed to the lower arm 35. It may be at distance from the gas actuator 40. The upper end of the damping system 64 may be joined to the second longitudinal beam 44.

As an alternative, the upper bracket 50 may be replaced by a fourth beam (not represented), and the gas actuator 40 may be fixed to said fourth beam. The fourth beam may be disposed, transversally and/or vertically, between the third longitudinal beam 46 and the upper longitudinal beams 30.
As a further alternative, the upper bracket is fixed to the fourth beam.

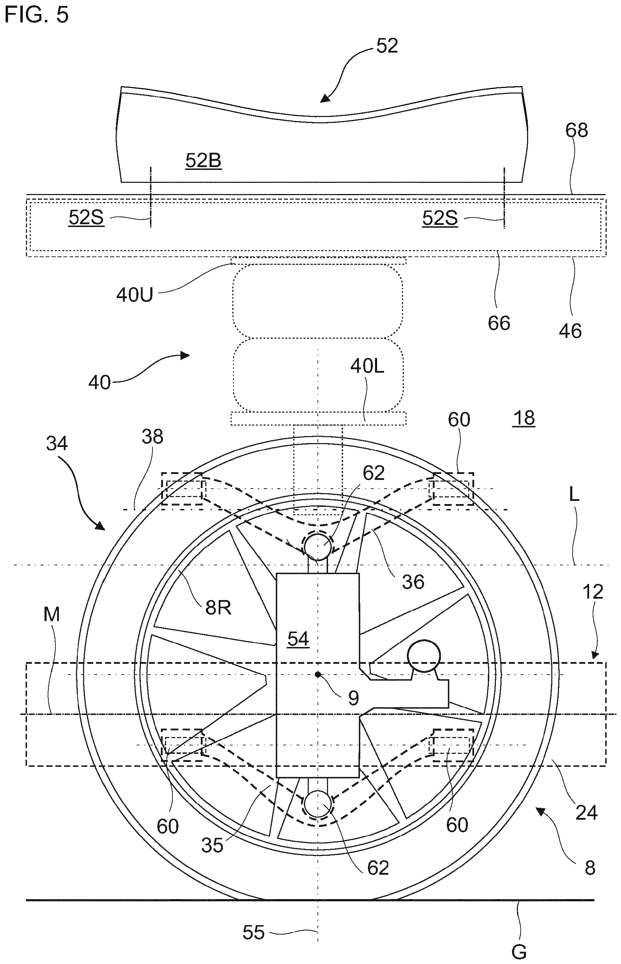

Figure 5 provides a schematic illustration of a side view of a suspension system 34 in accordance with a preferred embodiment of the invention. The suspension system 34 may be observed from inside, for instance from the longitudinal central axis (not represented). A figurative longitudinal axis L is drawn.
The suspension system 34 may generally correspond to the ones as described in relation with any one of figures 2 to 4. In the current figure, the wheel 8 is in the lower position with respect to the platform 12. The suspension system 34 is in the lower configuration, which may correspond to the driving configuration.
For the sake of clarity, the arms (35; 36) the beams (24; 46; 66) and the gas actuator 40 are represented with dashed lines. The second longitudinal beam is not represented.

The wheel housing 18 may comprise a fourth beam 66. The fourth beam 66 may be a horizontal and possibly a longitudinal beam. The fourth beam 66 may be vertically level with the third longitudinal beam 46. The fourth beam 66 may be vertically thinner than the third beam 46. The fourth beam 66 may have a transversal width which is larger than the width of the third beam 46. They may be parallel. They may form the upper portion of the wheel housing 18. They may be in contact of each other, notably transversally.
The upper beam (not represented) may be considered as a fifth longitudinal beam. Then, longitudinally level with the wheel 8, at least four or five longitudinal beams may form the wheel housing 18. This arrangement allows to reduce the thicknesses and the widths of these longitudinal beams, which increases the available place for the suspension system 34.
The seat 52, notably seat base 52B, is supported by the fourth beam 66 and/or the third beam 46. The seat 52 may comprise fixation means, such as screws 52S, which are fixed to the fourth beam 66 and/or the third beam 46. The seat 52 may be in contact of the wheel housing 18. The seat base 52B may be joined to the upper portion of the wheel housing 18.
The wheel housing 18 may comprise a separation 68. The separation 68 may be a plate and/or a sheet. The separation 68 may be horizontal. The separation 68 may be a fairing 68 and/or a trimming. The separation 68 may be water and air tight. The separation 68 may separate the seat 52 from the wheel 8. Vertical gaps are represented above and below the separation 68 in order to ease the figure comprehension. However, the separation 68 may be in contact of the seat 52 and of the beam(s) (46; 66).
Thus, the third beam 46 and/or the fourth beam 66 may join the seat 52 to the gas actuator 40. As an option, the third beam 46 and/or the fourth beam 66 may join seat screws 52S to the gas actuator 40, and possibly to its upper element 40U. Thus, the beams have the multiple functions to reinforce the wheel housing, to fix the seat and the gas actuator in a compact fashion, and to accommodate shorts arms (35; 36).
In the current configuration of the current embodiment, the pivot joints 60 of the upper arm 36 may be vertically above the rim 8R. The longitudinal pivot axis 38 through which the lower element 40L of the gas actuator 40 is joined to the upper arm 36 is represented. The pivot joints 60 of the lower arm 35 may be vertically level with the rim 8R. The upper arm 36 and the lower arm 35 may have a same length. They may have a length which is smaller than the diameter of the wheel in order to improve the compactness of the suspension system 34.
The pivot joints 60 joining the first longitudinal beam 24 to the lower arm 35 may be vertically in the lower half of the passenger platform 12; and/or of the first longitudinal beam 24. The lower half and the upper half of the first beam 24 and/or of the passenger platform 12 may be separated by the mid plane M.
The outer mechanical joints 62 connecting the knuckle 54 to the lower arm 35 and the upper arm 36 are within the rim 8R. The outer mechanical joints 62 may be arranged longitudinally along the gas actuator 40. The outer mechanical joints 62 may be ball joints through which the vertical pivot axis 55 is defined. The vertical pivot axis 55 may be centred on the gas actuator 40.
This arrangement upgrades the compactness. In addition, efforts received by the knuckle 54 are transmitted to the gas actuator 40 in a more direct fashion. In addition, the outer mechanical joint 36 of the upper arm 36 essentially receives compression mechanical stresses, which is mechanically better for the lifetime of the suspension system 34.
The mechanical path from the ground to the seat may be deduced from the current figure. This mechanical path reduces the shock transmission to the seat which, besides reduces the available space for arranging the suspension system 34.

As an alternative, the fourth beam 66 and the third beam 46 have a same vertical thickness.
As an alternative, the upper bracket is added under the fourth beam 66 and the third beam 46.
As an option, the upper surface of the separation is adapted to form a seat place which replaces the seat base. The seat may be a seat area.
In the current embodiment the upper arm 36 and the lower arm 35 have "V" shapes. However, any other configurations are considered. For instance, one of the arms may be replaced by two separate and distant branches.

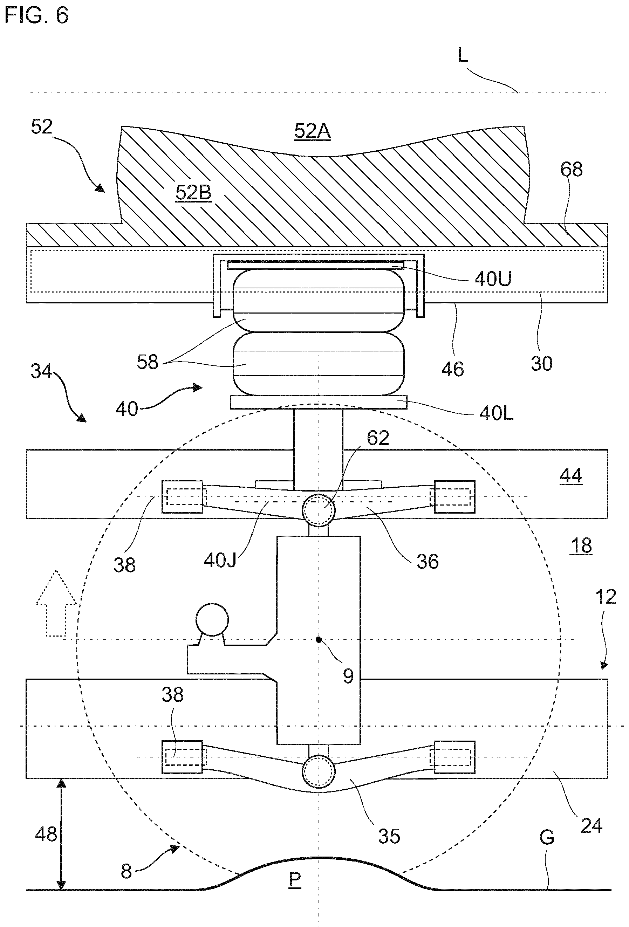

Figure 6 provides a schematic illustration of a side view of a suspension system 34 in accordance with a preferred embodiment of the invention. The current side view may correspond to a view from outside, for instance from the environment of the bus. A figurative longitudinal axis L is provided for the convenience of the reader.
The suspension system 34 may generally correspond to the ones as described in relation with any one of figures 2 to 5. The wheel 8 and the upper longitudinal beam 30 are presented with dashed lines for the sake of clarity.
The suspension system 34 is represented in an intermediate configuration. The rotation axis 9 of the wheel 8 is in an intermediate position, between the upper position and the lower position. The current configuration may correspond to a position where the wheel 8 meets a protrusion P on the ground G. The protrusion P protrudes toward the platform 12 and the first longitudinal beam 24. The ground clearance 48 may be reduced locally. The ground G may also exhibit recesses in which the wheel 8 could dive, and the rotation axis 9 may reach an even lower position.
In the current embodiment, the seat 52 is formed by the separation 68. This element may close the wheel housing 18. The separation 68 may be a hollow shell which forms the upper surface of the seat 52, or at least of the seat base 52B. The seat area 52A is above the second longitudinal beam 44, the third longitudinal beam 46, and the upper beam 30.

In the current configuration, the wheel 8 moves upward toward the upper longitudinal beams 30. The gas actuator 40 is compressed. The pressurized enclosures 58 may be compressed vertically between the upper element 40U and the lower element 40L.
The lower arm 35 and the upper arm 36 may oscillate about their pivot axis 38 toward in an intermediate position. It may mask the lower end of the lower element 40L. The outer mechanical joint 62 of the upper arm 36 may vertically overlap the longitudinal pivot axis 38. With respect to figure 5, the vertical positions of the pivot axes 38 of the upper arm may be inverted. The mechanical joint 40J may meet the upper pivot axis 38.

It should be understood that the detailed description of specific preferred embodiments is given by way of illustration only, since various changes and modifications within the scope of the invention will be apparent to the person skilled in the art. The scope of protection is defined by the following set of claims.

## Claims

1. A bus (2), notably an electric bus, said bus (2) comprising:
• a structure with a wheel housing (18);
• a wheel (8) in the wheel housing (18);
• a seat (52);
• a suspension system (34) connected to the wheel (8) and comprising:
∘ a lower arm (35);
∘ an upper arm (36) pivoting about a longitudinal pivot axis (38);
∘ a gas actuator (40) joined to the upper arm (36) and to the wheel housing (18).

2. The bus (2) in accordance with claim 1, wherein the wheel housing (18) includes a horizontal beam (46; 66) supporting the seat (52), the gas actuator (40) being fixed to said horizontal beam (46; 66), the horizontal beam (46; 66) possibly being a third longitudinal beam (46) to which the gas actuator (40) is fixed.

3. The bus (2) in accordance with claim 2, wherein the wheel housing (18) comprises a second longitudinal beam (44) to which the upper arm (36) is joined, and a first longitudinal beam (24) to which the lower arm (35) is joined, the second longitudinal beam (44) being at distance from the third longitudinal beam (46).

4. The bus (2) in accordance with any one claims 2 to 3, wherein the third longitudinal beam (46) extends longitudinally along the whole longitudinal length of the wheel housing (18), the third longitudinal beam (46) being above the second longitudinal beam (44).

5. The bus (2) in accordance with any one claims 2 to 4, wherein the wheel housing (18) includes a separation (68) between the horizontal beam and the seat (52), the gas actuator (40) being at distance from said separation (68), and preferably from the horizontal beam (46; 66).

6. The bus (2) in accordance with any one claims 1 to 5, wherein the upper arm (36) includes a transversally outer half (36O) and a transversally inner half (361), the gas actuator (40) being joined to said transversally inner half (361) and transversally at distance from the outer half (36O).

7. The bus (2) in accordance with any one claims 1 to 6, wherein the wheel housing (18) further comprises a fourth longitudinal beam (66) vertically level with the third transversal beam (46), the gas actuator (40) being joined to said fourth beam (66), and

8. The bus (2) in accordance with any one claims 1 to 7, wherein the suspension system (34) is configured such that the gas actuator (40) moves the rotation axis (9; 9L; 9U) of the wheel (8) at least between a lower position vertically level with a passenger platform (12), and an upper position above the passenger platform (12).

9. The bus (2) in accordance with any one claims 1 to 8, wherein the gas actuator (40) comprises a lower end fixed to the upper arm (36), the gas actuator (40) possibly comprising a lower element (40L) forming the lower end, an upper bracket (50) and a balloon (58) joining the lower element (40L) to the upper bracket (50), the upper bracket possibly being fixed to the third beam (46) or to the fourth beam (66).

10. The bus (2) in accordance with claim 9, wherein the lower element (40L) pivots with respect to the upper arm (36), and the upper bracket (50) is anchored to the wheel housing (18).

11. The bus (2) in accordance with any one claims 1 to 10, wherein the wheel (8) includes an in-wheel electric engine (56) below the gas actuator (40) and vertically at distance from said gas actuator (40), and the bus (2) comprises a gas supply (20) hydraulically connected to the gas actuator (40) and adapted to control the pressure within the gas actuator (40) in order to adapt the level and/or the bus inclination.

12. The bus (2) in accordance with any one claims 1 to 11, wherein the wheel housing (18) is a right wheel housing, the bus further comprising a left wheel housing (18) and a passenger compartment (49) between the right wheel housing and the left wheel housing, the gas actuator (40) being vertically level with the passenger compartment (49).

13. The bus (2) in accordance with any one claims 1 to 12, wherein the bus (2) comprises a passenger platform (12) extending from the wheel housing (18) and exhibiting a passenger floor (12F), the gas actuator (40) being above said passenger floor (12F), and the wheel (8) includes a rotation axis (9) vertically between the gas actuator (40) and the passenger platform (12).

14. The bus (2) in accordance with any one claims 1 to 13, wherein the bus (2) comprises a passenger platform (12), longitudinally level with gas actuator (40) the passenger platform (12) extends transversally over at least the half of the width of the bus (2).

15. The bus (2) in accordance with any one claims 1 to 14, wherein the wheel (8) is a first wheel, the suspension system (34) is a first suspension system, the bus (2) further comprising a second wheel (8) in the wheel housing (18), a second suspension system (34) joined to the second wheel, the second suspension system being identical to and longitudinally at distance from the first suspension system, the gas actuators (40) of the first suspension system and the second suspension system being at distance from each other.
